## Europäisches Patentamt

## European Patent Office

## Office européen des brevets

(11) Veröffentlichungsnummer: **0 025 816**
**B1**

(12) # EUROPÄISCHE PATENTSCHRIFT

(45) Veröffentlichungstag der Patentschrift:
24.10.84

(21) Anmeldenummer: **80102503.2**

(22) Anmeldetag: **08.05.80**

(51) Int. Cl.³: **G 07 C 11/00**, G 08 G 1/12,
B 61 L 25/04

(54) **Einrichtung zur automatischen Identifizierung von Objekten und/oder Lebewesen.**

(30) Priorität: **16.05.79 DE 2919753**

(43) Veröffentlichungstag der Anmeldung:
**01.04.81 Patentblatt 81/13**

(45) Bekanntmachung des Hinweises auf die Patenterteilung:
**24.10.84 Patentblatt 84/43**

(84) Benannte Vertragsstaaten:
**CH FR GB IT LI SE**

(56) Entgegenhaltungen:
**DE - A - 2 500 210**
**DE - A - 2 739 660**
**DE - A - 2 747 388**
**GB - A - 1 427 920**
**US - A - 3 644 883**

(73) Patentinhaber: **BROWN, BOVERI & CIE
Aktiengesellschaft Mannheim, Kallstadter Strasse 1,
D-6800 Mannheim Käfertal (DE)**

(72) Erfinder: **Berthold, Rainer, Dipl.-Phys., Wieiandstrasse 4,
D-6901 Gaiberg (DE)**
Erfinder: **Strietzel, Rainer, Schnepfengrund 8,
D-6900 Heidelberg 1 (DE)**

(74) Vertreter: **Kempe, Wolfgang, Dr. et al, c/o Brown, Boveri
& Cie AG Postfach 351, D-6800 Mannheim 1 (DE)**

## Beschreibung

Die Erfindung bezieht sich auf eine Einrichtung gemäss dem Oberbegriff des Patentanspruches 1.

Aus der DE-OS 2 747 388 ist eine Einrichtung zur Identifizierung von Objekten bekannt. Die Einrichtung umfasst ein Abfragegerät sowie ein oder mehrere Antwortgeräte. Innerhalb des Abfragegerätes ist ein Sender vorgesehen, mittels dessen ein Signal an das bzw. die Antwortgeräte abgestrahlt werden kann. Dieses Signal wird dem Sender von einem Festwertspeicher zugeführt mit dem er in Verbindung steht oder innerhalb des Abfragegerätes mittels einer programmierbaren Logik erzeugt und an den Sender weitergeleitet. Das bzw. die Antwortgeräte sind jeweils mit einem Empfänger ausgerüstet, der ein solches Signal empfangen und analysieren kann. Innerhalb eines jeden Antwortgerätes ist mindestens ein Signal gespeichert bzw. kann ein solches Signal erzeugt werden. Wird Gleichheit zwischen dem empfangenen Signal und dem im Antwortgerät gespeicherten oder erzeugten Code ermittelt, so gibt das gerade angesprochene Antwortgerät ein für sich typisches programmiertes Signal an das Abfragegerät ab.

Von Nachteil ist bei dieser Einrichtung der Entgegenhaltung, dass hier keine Lösung zur Energieversorgung des bzw. der Antwortgeräte vorgesehen ist und zudem die in jedem Antwortgerät gespeicherten Daten nur mangelhaft gesichert sind.

Der Erfindung liegt deshalb die Aufgabe zugrunde, eine Einrichtung der eingangs genannten Art aufzuzeigen, welche die genannten Vorteile des Standes der Technik aufweist, bei der aber darüber hinaus die Energieversorung des Antwortgerätes vereinfacht und eine zusätzliche Sicherung gegen die unerwünschte Aussendung der in jedem Antwortgerät gespeicherten Daten vorgesehen ist.

Diese Aufgabe wird durch die kennzeichnenden Merkmale des Patentanspruches 1 gelöst.

Weitere erfindungswesentliche Merkmale sind in den Unteransprüchen gekennzeichnet.

Durch die Trennung von Energie- und Öffnungscodeabstrahlung wird eine wesentlich erhöhte Sicherheit gegen unbefugtes Abfragen der im Antwortgerät gespeicherten Daten erreicht. Andererseits ist die befugte Abfrage der gespeicherten Daten gegenüber dem Verfahren bei den bisher bekannten Einrichtungen nicht erschwert. Die gesamte elektronische Schaltungseinheit des Antwortgerätes lässt sich in Miniaturform, z.B. als integrierte Halbleiterschaltung oder als Dünnschichtschaltung herstellen. Vorteilhaft ist auch, dass eine nachträgliche, unbefugte Manipulierung an der elektronischen Schaltungseinheit des Antwortgerätes zu deren Zerstörung führt und damit Manipulationen unmöglich macht.

Vorzugsweise können sowohl im Abfragegerät als auch im Antwortgerät Öffnungscodezusatzspeicher vorgesehen sein. Diese Zusatzspeicher können dazu benutzt werden, um beispielsweise einen erhöhten Grad von Geheimhaltung für bestimmte Kennzeichenteile im Kennzeichenspeicher zu erreichen. Zu diesem Zweck können vorteilhafter Weise auch dem Kennzeichenspeicher weitere Kennzeichen-Zusatzspeicher zugeordnet sein. Die erfindungsgemässe Einheit bekommt dadurch Eigenschaften, wie sie, z.B. von Gebäudeschliessanlagen bekannt sind. Bei diesen Anlagen passen manche Schlüssel in alle Schlösser, andere Schlüssel nur in bestimmte Schlösser und beispielsweise nur ein einziger Schlüssel in ein bestimmtes Schloss.

Erfindungsgemäss ist der Energiesender im Abfragegerät vom Öffnungscodesender getrennt. Er strahlt eine Energie an das Abfragegerät ab. Auch im Antwortgerät sind erfindungsgemäss Energieempfänger und Öffnungscodeempfänger getrennt ausgebildet. Vom Energieempfänger wird die Versorgungsenergie für die einzelnen Bauteile des Abfragegerätes empfangen und einem Energiewandler zugeführt.

Der vom Abfragegerät ausgestrahlte und der im Öffnungscodespeicher des Antwortgerätes gespeicherte Öffnungscode werden miteinander im Öffnungscodevergleicher des Antwortgerätes verglichen. Stimmen beide Codes überein, so wird über einen vorzugsweise gesonderten Öffnungscodebearbeiter der Kennzeichensender aktiviert. Das im Kennzeichenspeicher gespeicherte Kennzeichen wird über einen Modulator im Sender auf die ausgestrahlte Energie aufmoduliert und von einer Sendeantenne abgestrahlt. Die Antenne des Antwortgerätes ist vorzugsweise als Rundstrahlantenne, die Antenne des Abfragegerätes entweder als Induktionsschleife oder als Richtstrahlantenne ausgeführt.

Vorzugsweise ist die Verbindungsleitung zwischen Öffnungscodespeicher und Öffnungscodezusatzspeicher und/oder die Verbindungsleitung zwischen Kennzeichenspeicher und Kennzeichenzusatzspeicher nachträglich aktivierbar oder desaktivierbar. Auf diese Weise ist es möglich, dem Objekt bzw. Lebewesen, das erfindungsgemäss mit einem solchen Antwortgerät ausgerüstet ist für eine beliebige Zeitspanne eine Zusatzinformation einzuprägen, indem entweder der zur Aktivierung benötigte Öffnungscode verkürzt oder verlängert und damit die Geheimhaltungsstufe verringert oder erhöht wird, oder in dem das zur Identifizierung dienende Kennzeichen verlängert oder verkürzt wird. Die Beeinflussung der Verbindungsleitung kann beispielsweise dadurch geschehen, dass durch einen Laserstrahl oder durch ein starkes äusseres elektromagnetisches Feld eine bisher bestehende Leitungsverbindung oder eine Kurzschlussverbindung aufgetrennt werden.

Vorteilhafter Weise besteht der Kennzeichenspeicher zum Teil aus einem Festspeicher und zum anderen Teil aus einem änderbaren Speicher. Ist zusätzlich ein Kennzeichencodierempfänger vorgesehen, so kann der veränderbare Kennzeichenspeicher bzw. Kennzeichenzusatzspeicher extern und zerstörungsfrei geändert werden. Auch hier kann der Zugang zum änderbaren Speicher von der gleichzeitigen Abstrahlung eines Öffnungscodes abhängig gemacht werden.

Eine bevorzugte Anwendung der erfindungsgemässen Einrichtung ist die Freund-, Feind-Erkennung bei militärischen Geräten oder die Fernerkennung oder Identifizierung von militärischen Personen. Nach dem heute bereits Codes bekannt sind, die nicht brechbar sind – sei es aufgrund einer mathematischen Verschlüsselung, sei es aufgrund der extrem hohen Anzahl von Kombinationsmöglichkeiten – ist eine sichere Identifizierung gewährleistet. Dabei ist es möglich, mit einem einfachen Code nur den Öffnungscodespeicher zu öffnen, so dass der Kennzeichenspeicher ein Kennzeichen zur Freund-, Feind-Erkennung abgibt. Durch einen zusätzlichen Öffnungscode kann ein Öffnungscodezusatzspeicher aktiviert werden, wodurch auch ein Kennzeichenzusatzspeicher seine Zusatzkennzeichen aussendet. Damit können beispielsweise zusätzliche Daten die militärische Einheit des Gerätes bzw. der Person, Kampfauftrag, aktuelle Kampfkraft, Munitionsvorrat usw. zusätzlich abgefragt und in einer zentralen Datenverarbeitung berücksichtigt werden.

Bei einer Anwendung in militärischem Bereich können in die Erkennungsmarken von militärischen Personen beispielsweise auch persönliche Daten wie Geburtsdatum, Blutgruppe, Impfung, Allergien, überstandene Krankheiten, Arzneimittelverträglichkeiten usw. gespeichert werden. Um diese Daten abfragen zu können, müssen Sanitäter und Ärzte mit einem tragbaren Abfragegerät ausgerüstet sein. Durch entsprechende Codierung kann verhindert werden, dass das einem Sanitäter an die Front mitgegebene Gerät eine Abfrage von rein militärischen Daten ermöglicht, so dass auch dann, wenn ein solches Gerät dem Feind in die Hände fallen sollte, er mit diesem Gerät nichts anfangen kann.

Ein weiteres bevorzugtes Anwendungsgebiet ist die Herstellung von fälschungssicheren Kraftfahrzeugkennzeichen, die auch zur Fernerkennung geeignet sind. Sobald alle Kraftfahrzeuge mit der erfindungsgemässen Einrichtung ausgerüstet sind, ist es möglich, an beliebigen Orten, z.B. Autobahnauffahrten, Brücken, Kreuzungen, Ampeln, Streifenfahrzeugen, z.B. während einer Ringfahndung oder auch an Grenzübergangsstellen eine unbemerkte Kontrolle durchzuführen. Die Abfragegeräte strahlen das Energiefeld und den Öffnungscode ab, worauf die Antwortgeräte an den Kraftfahrzeugkennzeichen zur Abgabe ihrer gespeicherten Kennzeichen veranlasst werden. Die vom Antwortgerät empfangenen Kennzeichen werden ständig über Funk an einen Zentralcomputer weitergegeben und mit den Fahndungslisten automatisch verglichen. Sobald ein gesuchtes Kraftfahrzeug erkennbar ist, erfolgt eine Rückmeldung, worauf die Sicherstellung des betreffenden Kraftfahrzeugs veranlasst werden kann.

Da in dem Kennzeichenspeicher und ggf. den Kennzeichenzusatzspeichern alle Daten eines Kraftfahrzeugs und nicht nur die Daten des Kennzeichens selbst gespeichert werden können, ist die Montage fremder Kennzeichen an einem Kraftfahrzeug nicht möglich. Auch das Anbringen gestohlener Kraftfahrzeugkennzeichen an einer sogenannten Doublette, d.h. an einem Fahrzeug der gleichen Baureihe und des gleichen äusseren Erscheinungsbildes, wie es in Terroristenkreisen allgemein üblich ist, wird durch die Verwendung erfindungsgemässer fälschungssicherer KFZ-Kennzeichen unmöglich gemacht. Selbst die Verwendung eines gefälschten KFZ-Kennzeichens ohne eingebautes Antwortgerät führt zu einer Erkennung, da ein solches Kennzeichen auf einen einfallenden Energiestrahl kein Antwortsignal abgibt.

Unter KFZ-Kennzeichen ist hier nicht nur das herkömmliche Nummernschild zu verstehen, sondern auch jedes andere Kennzeichen, z.B. eine erfindungsgemäss präparierte Fensterscheibe oder dergleichen.

Bei einer Installation des Abfragegerätes in einer überwachten Ampel oder in einer Radargeschwindigkeitskontrollanlage werden zusätzliche Daten über das Kraftfahrzeug gewonnen, das die Verkehrsübertretung begangen hat.

Auf diese Weise können auch Verkehrszählungen mit zusätzlicher Erfassung von Einzelangaben, z.B. Standort, Alter, Typ der Fahrzeuge usw. durchgeführt werden.

Ein weiteres Einsatzgebiet besteht bei der Observationsverfolgung. Hier kann der Weg eines Kraftfahrzeugs vollautomatisch und zentral verfolgt werden. Zusätzlich kann auch jedes Kraftfahrzeug selbst mit einem erfindungsgemäss arbeitenden Abfragegerät ausgerüstet werden. Zusammen mit einem erfindungsgemäss ausgerüsteten Kraftfahrzeugkennzeichen ist eine unbemerkbare Trennung von Kennzeichnung und zugehörigem Fahrzeug nicht mehr möglich. Gefälschte oder gestohlene Kennzeichen führen im Abfragegerät zu unterschiedlichen Anzeigen, die sofort durch einen einfachen Codevergleich erkannt und angezeigt werden.

Zusätzlich lassen sich auch die Kraftfahrzeugpapiere mit einer erfindungsgemässen Einrichtung ausrüsten. Dadurch wird die Fälschungs- und Diebstahlssicherheit noch weiter erhöht, wobei als wesentlicher Vorzug gegenüber anderen bereits üblichen oder auch vorgesehenen Lösungen die Möglichkeit der berührungslosen, unsichtbaren Fernabfrage und die Möglichkeit zur vollautomatischen Überprüfung der abgefragten Daten in einem zentralen Computer besteht.

Ein weiteres grosses Anwendungsgebiet ist die Herstellung von fälschungssicheren und jederzeit automatisch abfragbaren personenbezogenen Papieren, d.h. von Personalausweisen, Reisepässen, Scheckkarten, Notfallausweisen, Firmenausweisen usw. Bei Verwendung in Personaldokumenten könnte dann unter Umständen auf das Vorzeigen der Papiere verzichtet werden, da die Ausweise auch dann automatisch abgefragt werden können, wenn sie sich optisch unsichtbar in einer Anzugs- oder Handtasche befinden.

Es sind heute bereits Geldausgabeautomaten bei verschiedenen Bankinstituten in Gebrauch, die durch Einwurf einer Kundenkarte und durch Eintasten einer persönlichen Codezahl zur Ausgabe von Bargeld veranlasst werden können. Die Kundenkarte ist eine Plastikkarte in der Grösse einer Euroscheckkarte, die neben den auf der Vorderseite visuell erkennbaren Daten eine Magnetstreifen-Codierung auf der Rückseite trägt, die automatisch gelesen werden kann. Auf dem Magnetstreifen sind Kundenkenndaten, Kontonummer, Abhebungszeitraum, Betragslimit und die nur dem Kunden bekannten Codezahl gespeichert. Durch die Speicherung insbesonderer der Codezahl auf dem praktisch frei zugänglichen Magnetstreifen besteht jedoch keine grosse Sicherheit gegen Fälschungen, da die Magnetisierung des Magnetstreifen jederzeit ausgelesen werden kann. Bei Verwendung eines erfindungsgemässen Antwortgerätes wird die Codezahl jedoch erst dadurch zugänglich, dass vom Geldausgabeautomaten ein geheimer Öffnungscode ausgesandt wird.

Ein weiteres grosses Anwendungsgebiet der erfindungsgemässen Einrichtung ist die Sicherung von Wert- und Museumsgegenständen sowie von Waren in Geschäften gegen Diebstahl. Hierzu wird das Antwortgerät an den betreffenden Gegenständen oder Waren angebracht.

Im Falle der reinen Diebstahlsicherung bleibt das Antwortgerät an dem zu schützenden Objekt im ständig strahlenden Energiefeld des Abfragegerätes. Wird der Gegenstand aus dem gegebenenfalls einstellbaren Bereich des Energiefeldes gebracht, bricht die Verbindung zum Kennzeichenempfänger sofort ab und es wird Alarm ausgelöst. Gelingt es dem Täter trotzdem, den Gegenstand aus dem Gebäude zu bringen, so kann der Gegenstand jederzeit mit transportablen Fernabfragegeräten verfolgt, geortet und identifiziert werden.

Im Falle der Anwendung der erfindungsgemässen Einrichtung zur Diebstahlsicherung in Warenhäusern, Leihbibliotheken usw. wird das Abfragegerät am Ausgang aufgestellt. Sobald ein Gegenstand in das Energiefeld des Abfragegerätes gelangt, von dem das mit dem erfindungsgemässen Antwortgerät ausgerüstete Preisetikett oder die entsprechend ausgerüstete Verleihkarte nicht entfernt ist, wird Alarm ausgelöst.

Die genannten Anwendungsfälle für eine Diebstahlssicherung dienen nur als Beispiele. Eine entsprechende Anwendung ist auch bei vielen anderen Gegenständen möglich. Auch Tiere und Menschen, z.B. Entführungsopfer, können mit erfindungsgemässen Antwortgeräten versehen z.B. durch Verschlucken der Einheit (Energiequelle ist in diesem Fall eine Batterie) und damit auch aus der Ferne verfolgt, geortet und identifiziert werden. Dabei ist von besonderem Vorteil, dass das Antwortgerät nur dann ein Signal aussendet, wenn der richtige Öffnungscode eingestrahlt wird. Dadurch ist eine Ortung des Gerätes durch Unbefugte aufgrund einer dauernd ausgesandten Strahlung, wie es beispielsweise bei herkömmlichen Minispionen der Fall ist, praktisch nicht möglich.

Ein weiteres Anwendungsgebiet besteht bei der Gruppe der Zahlungsmittel, d.h. bei Münzen, Geldscheinen, Scheckformularen usw. Hier können mit Hilfe der Öffnungscode-Speicher und der Öffnungscode-Zusatzspeicher sowie der Kennzeichen-Speicher und der Kennzeichen-Zusatzspeicher mehrere Sicherheitsbereiche geschaffen werden. Mit einem einfachen Code kann beispielsweise auf elektronischem Wege eine Wert- und Echtheitserkennung vorgenommen werden. Durch eine zusätzliche Speicherung im Kennzeichen-Zusatzspeicher kann beispielsweise Raub- und Erpressergeld markiert werden, wobei diese Markierung nur von Polizei und Bankinstituten erkannt werden kann, da nur diesen der Öffnungszusatzcode bekannt gegeben wird. Eine dritte Sicherheitstufe kann durch einen nur den Banken oder gar nur der Zentralbank bekannten Öffnungszusatzcode angesprochen werden.

Bei Ausrüstung von Banknoten mit dem erfindungsgemässen Antwortgerät kann auch eine automatische Zählung und Sortierung des Geldes in entsprechenden Maschinen vorgenommen werden, ohne dass das Geld zuvor von Menschen sortiert und gebündelt werden muss. Zu diesem Zweck muss im Kennzeichen-Speicher lediglich der Wert der Banknote miteingespeichert sein. Ist ausserdem auch die Seriennummer der Banknote eingespeichert, so kann diese laufend und vollautomatisch mit dem in einem Zentralcomputer gespeicherten Seriennummern der umlaufenden oder der im Tresor liegenden Banknoten verglichen werden; bei fehlender Übereinstimmung wird Alarm ausgelöst. Aber auch gefälschte Banknoten ohne ein erfindungsgemässes Antwortgerät fallen auf, da sie bei Einfall des Energiestrahls kein Antwortsignal aussenden. Echte Banknoten, bei denen nur das Antwortgerät defekt ist, können vollautomatisch aussortiert und der Vernichtung zugeführt werden.

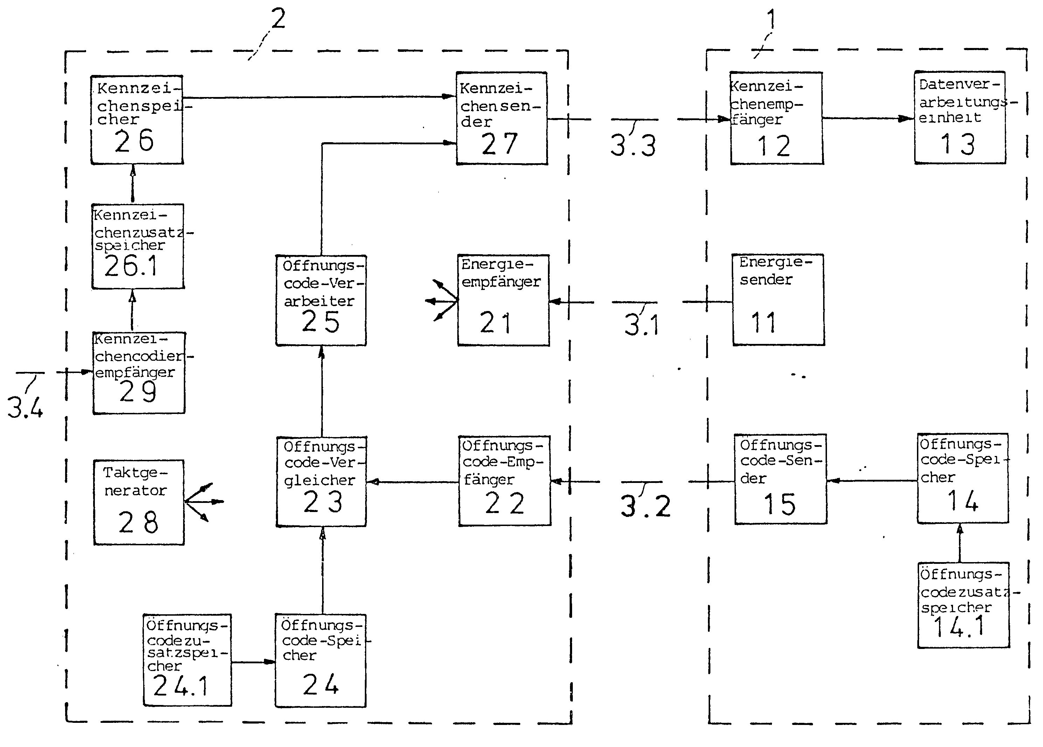

Anhand der Zeichnung soll die erfindungsgemässe Einrichtung in Form eines Blockschaltbildes erläutert werden.

Die einzige Figur zeigt ein Abfragegerät 1, das ortsfest oder auch mobil eingesetzt werden kann. Es besteht im wesentlichen aus einem Energiesender 11, der einen Energiestrahl 3.1 aussendet. Weiterhin befindet sich im Abfragegerät 1 ein Öffnungscode-Speicher 14 sowie gegebenenfalls Öffnungscode-Zusatzspeicher 14.1. Der Öffnungscode wird über den Öffnungscode-Sender 15 auf einem Energiestrahl 3.2 übertragen. Weiterhin befindet sich im Abfragegerät 1 ein Kennzeichen-Empfänger 12, der über einen Energiestrahl 3.3 Daten von einem Antwortgerät 2 empfängt. Die vom Kennzeichen-Empfänger 12 empfangenen Daten werden in einer Datenverarbeitungseinheit 13 ausgewertet und gegebenenfalls angezeigt.

Im Antwortgerät 2 befindet sich im wesentlichen ein Energieempfänger 21, der die vom Energiesender 11 eingestrahlte Energie umwandelt in eine Versorgungsspannung für die übrigen Baugruppen des Antwortgerätes 2. Der vom Öffnungscode-Sender 15 abgestrahlte Öffnungscode wird in einem Öffnungscode-Empfänger 22 empfangen, demoduliert und an einen Öffnungscode-Vergleicher 23 gegeben. Dieser vergleicht den empfangenen Öffnungscode mit dem in einen Öffnungscode-Speicher 24 und gegebenenfalls Öffnungscode-Zusatzspeichern 24.1 gespeicherten Code. Bei Übereinstimmung der beiden Codes wird über einen Öffnungscode-Verarbeiter 25, der gegebenenfalls mit dem Öffnungscode-Vergleicher 23 vereinigt sein kann, ein Signal an einen Kennzeichen-Sender 27 gegeben.

Dieses Signal aktiviert den Kennzeichen-Sender 27, so dass dieser das in einem Kennzeichen-Speicher 26 und gegebenenfalls Kennzeichen-Zusatzspeichern 26.1 gespeicherte Kennzeichen über eine (nicht dargestellte) Antenne aussendet. Im Antwortgerät kann ferner ein Taktgenerator 28 angeordnet sein, der den logischen Ablauf der Datenverarbeitung in den einzelnen Baugruppen steuert und koordiniert.

Im Antwortgerät 2 ist ferner ein Kennzeichen-Codierempfänger 29 vorgesehen, der ein über einen Energiestrahl 3.4 empfangenes Kennzeichencodiersignal an den Kennzeichen-Zusatzspeicher 26.1 leitet. Zu diesem Zweck muss der Kennzeichen-Zusatzspeicher als Lese-Schreib-Speicher ausgeführt sein. Das Einschreiben der von aussen eingestrahlten Daten in den Lese-Schreib-Speicher kann ebenso wie das Auslesen davon abhängig gemacht werden, dass gleichzeitig ein bestimmter Öffnungscode über den Funkweg 3.2 abgestrahlt wird.

Zur Übertragung der Daten von Abfragegerät zum Antwortgerät und zurück kann prinzipiell das ganze Spektrum der elektromagnetischen Wellen verwendet werden. Es ist jedoch zu berücksichtigen, dass eine hohe Übertragungsgeschwindigkeit erzielt werden muss und dass auch möglichst eine Bündelung der vom Energiesender 11 abgestrahlten Energie auf die Empfangsantenne vorgenommen werden sollte, da diese naturgemäss in vielen Anwendungsfällen extrem klein ausgebildet sein muss. Da gleichzeitig auch das Durchdringen von undurchsichtigen Gegenständen wie Kleidern, Isolierstoffen usw. gewünscht wird, wird im allgemeinen der Mikrowellenteil des elektromagnetischen Spektrums zum Einstrahlen verwendet werden.

**Patentansprüche**

1. Einrichtung zur automatischen Identifizierung von Objekten und/oder Lebewesen, bestehend aus einem ortsfesten Abfragegerät (1) und einem am Objekt bzw. Lebewesen befestigten Antwortgerät (2), wobei das Abfragegerät (1) einen Kennzeichenempfänger (12), eine Datenverarbeitungseinheit (13), einen Öffnungscodespeicher (14, 14.1) und einen Öffnungscodesender (15) umfasst und das Antwortgerät (2) einen Kennzeichenspeicher (26, 26.1), einen Taktgenerator (28), eine einen Kennzeichensender (27) enthaltende Schaltungseinheit und wenigstens eine Antenne aufweist sowie mit einem Öffnungscodeempfänger (22), einem Öffnungscodespeicher (24, 24.1) und einem Öffnungscodevergleicher (23) ausgerüstet ist, die mit den übrigen Baugruppen (21, 26, 26.1, 27 und 28) des Antwortgeräts (2) so verschaltet sind, dass ein im Kennzeichenspeicher (26, 26.1) gespeichertes Kennzeichen nur dann vom Kennzeichensender (27) abgestrahlt wird, wenn der vom Abfragegerät (1) abgestrahlte und der im Antwortgerät (2) gespeicherte Öffnungscode übereinstimmen, dadurch gekennzeichnet, dass das Abfragegerät (1) einen vom Öffnungscodesender (15) getrennten Energiesender (11) aufweist und das Antwortgerät (2) einen Energieempfänger (21) und einen Energiewandler enthält.

2. Einrichtung nach Anspruch 1, dadurch gekennzeichnet, dass die Verbindungsleitung zwischen dem Öffnungscodespeicher (24) und dem Öffnungscodezusatzspeicher (24.1) nachträglich aktivierbar oder desaktivierbar ist.

3. Einrichtung nach einem der Ansprüche 1 oder 2, dadurch gekennzeichnet, dass die Verbindungsleitung zwischen dem Kennwortspeicher (26) und dem Kennwortzusatzspeicher (26.1) nachträglich aktivierbar oder desaktivierbar ist.

4. Einrichtung nach einem der Ansprüche 1 bis 3, dadurch gekennzeichnet, dass die Antenne des Energiesenders (11) als Induktionsschleife oder Richtantenne ausgebildet ist.

5. Einrichtung nach einem der Ansprüche 1 bis 4, dadurch gekennzeichnet, dass ein Codezeichen-Codierempfänger (29) vorgesehen ist, der eine externe Codierung der Kennzeichenspeicher (26) bzw. Kennzeichenzusatzspeicher (26.1) ermöglicht.

6. Einrichtung nach einem der Ansprüche 1 bis 5, dadurch gekennzeichnet, dass die Einrichtung zur Freund-, Feinderkennung in militärischem Gerät oder zur Fernerkennung und Identifizierung von Personen einsetzbar ist.

7. Einrichtung nach einem der Ansprüche 1 bis 6, dadurch gekennzeichnet, dass die Einrichtung zur Fälschungssicherung von Kraftfahrzeugkennzeichen, Kraftfahrzeugpapieren, Personalausweisen, Reisepässen, Kreditkarten, Geld in Form von Münzen und Scheinen sowie Preisetiketten an Verkaufswaren einsetzbar ist.

**Claims**

1. A device for the automatic identification of objects and/or living beings, consisting of a stationary interrogation unit (1) and a response unit (2) which is attached to the object or living being, the interrogation unit (1) comprising an identification receiver (12), a data processing unit (13), an opening-code memory (14, 14.1) and an opening-code transmitter (15) and the response unit (12) being provided with an identification memory (26, 26.1), a clock generator (28), a circuit unit containing an identification transmitter (27) and at least one antenna and being equipped with an opening-code receiver (22), an opening-code memory (24, 24.1) and an opening-code comparator (23) which are interconnected to the remaining assemblies (21, 26, 26.1, 27 and 28) of the response unit (2) in such a manner that an identification stored in the identification memory (26, 26.1) is radiated by the identification transmitter (27) only if the opening code radiated by the interrogation unit (1) and the opening code stored in the response unit (2) agree, characterised in that the interrogation unit (1) is provided with an energy transmitter (11) which is separate from the opening-code transmitter (15) and that the response unit (2) contains an energy receiver (21) and an energy converter.

2. A device according to Claim 1, characterised in that the connecting line between the opening-code memory (24) and the supplementary opening-code memory (24.1) can be later activated or deactivated.

3. A device according to one of Claims 1 or 2, characterised in that the connecting line between the keyword memory (26) and the supplementary keyword memory (26.1) can later be activated or deactivated.

4. A device according to one of Claims 1 to 3, characterised in that the antenna of the energy transmitter (11) is constructed as an induction loop or directional antenna.

5. A device according to one of Claims 1 to 4, characterised in that a code-character coding receiver (29) is provided which makes external coding of the identification memory (26) and supplementary identification memory (26.1) possible.

6. A device according to one of Claims 1 to 5, characterised in that the device can be used for friend/foe recognition in military equipment or for remote recognition and identification of persons.

7. A device according to one of Claims 1 to 6, characterised in that the device can be used for protection against forgery of motor-vehicle number plates, motorvehicle papers, personal identification papers, passports, credit cards, money in the form of coins and notes as well as price labels on sales goods.

**Revendications**

1. Dispositif pour l'identification automatique d'objets et/ou d'êtres vivants, comprenant un appareil interrogateur stationnaire (1) et un appareil répondeur (2) fixé sur l'objet ou l'être vivant, ledit appareil interrogateur (1) renfermant un récepteur (12) de signes identificateurs, une unité (13) de traitement de données, une mémoire (14, 14.1) de codes d'ouverture et un émetteur (15) de codes d'ouverture et ledit appareil répondeur (2) présentant une mémoire (26, 26.1) de signes identificateurs, un générateur d'impulsions (28), un montage renfermant un émetteur (27) de signes identificateurs, et au moins une antenne, et étant équipé d'un récepteur (22) de codes d'ouverture, d'une mémoire (24, 24.1) de codes d'ouverture et d'un comparateur (23) de codes d'ouverture qui sont interconnectés avec les autres groupes composants (21, 26, 26.1, 27 et 28) de l'appareil répondeur (2), de telle sorte qu'un signe identificateur mémorisé par la mémoire (26, 26,1) de signes identificateurs soit diffusé, par l'émetteur (27) de signes identificateurs, seulement lorsque le code diffusé par l'appareil interrogateur (1) et le code d'ouverture mémorisé dans l'appareil répondeur (2) coïncident, caractérisé par le fait que l'appareil interrogateur (1) présente un émetteur d'énergie (11) séparé de l'émetteur (15) de codes d'ouverture et l'appareil répondeur (2) renferme un récepteur d'énergie (21) et un convertisseur d'énergie.

2. Dispositif selon la revendication 1, caractérisé par le fait que le conducteur de liaison entre la mémoire (24) de codes d'ouverture et la mémoire supplémentaire (24.1) de codes d'ouverture peut être activé ou désactivé ultérieurement.

3. Dispositif selon l'une des revendications 1 ou 2, caractérisé par le fait que le conducteur de liaison entre la mémoire (26) de mots identificateurs et la mémoire supplémentaire (26.1) de mots identificateurs peut être activé ou désactivé ultérieurement.

4. Dispositif selon l'une des revendications 1 à 3, caractérisé par le fait que l'antenne de l'émetteur d'énergie (11) est réalisée sous la forme d'une boucle d'induction ou d'une antenne orientable.

5. Dispositif selon l'une des revendications 1 à 4, caractérisé par le fait qu'il est prévu un récepteur-codeur (29) de signes de codage, qui permet un codage externe de la mémoire (26) de signes identificateurs ou de la mémoire supplémentaire (26.1) de signes identificateurs.

6. Dispositif selon l'une des revendications 1 à 5, caractérisé par le fait que ce dispositif peut être utilisé pour la reconnaissance ennemi-ami dans des appareils militaires ou pour la reconnaissance à distance et l'identification de personnes.

7. Dispositif selon l'une des revendications 1 à 6, caractérisé par le fait que ce dispositif peut être utilisé comme sécurité anti-falsification de plaques d'immatriculation de véhicules automobiles, de papiers de véhicules automobiles, de cartes d'identité, de passeports, de cartes de crédit, d'argent sous la forme de pièces et de billets, ainsi que d'étiquettes de marquage de prix de marchandises.

2

Kennzeichenspeicher
26

Kennzeichenzusatzspeicher
26.1

Kennzeichencodierempfänger
29

3.4

Taktgenerator
28

Öffnungscode-Verarbeiter
25

Öffnungscode-Vergleicher
23

Öffnungscodezusatzspeicher
24.1

Öffnungscode-Speicher
24

Kennzeichensender
27

Energieempfänger
21

Öffnungscode-Empfänger
22

3.3

3.1

3.2

1

Kennzeichenempfänger
12

Datenverarbeitungseinheit
13

Energiesender
11

Öffnungscode-Sender
15

Öffnungscode-Speicher
14

Öffnungscodezusatzspeicher
14.1